**Europäisches Patentamt**

**European Patent Office**

**Office européen des brevets**

(11) Veröffentlichungsnummer: **0 122 971**

**A2**

(12) # EUROPÄISCHE PATENTANMELDUNG

(21) Anmeldenummer: **83112675.0**

(22) Anmeldetag: **16.12.83**

(51) Int. Cl.³: **G 01 K 17/08**

(30) Priorität: **25.02.83 DE 3306644**

(43) Veröffentlichungstag der Anmeldung:
**31.10.84 Patentblatt 84/44**

(84) Benannte Vertragsstaaten:
**AT BE CH DE LI LU NL**

(71) Anmelder: **Techem GmbH**
**Saonestrasse 1**
**D-6000 Frankfurt am Main 71(DE)**

(72) Erfinder: **Mrozinski, Dieter**
**Im Kleinfeldchen 14c**
**D-6236 Eschborn(DE)**

(74) Vertreter: **Schubert, Siegmar, Dipl.-Ing. et al,**
**Patentanwälte Dr. V. Schmied-Kowarzik Dr. P. Weinhold**
**Dr.-Ing. G. Dannenberg Dr. D. Gudel Dipl.-Ing. S.**
**Schubert Dr. P. Barz Grosse Eschenheimer Strasse 39**
**D-6000 Frankfurt am Main 1(DE)**

(54) Verfahren und Vorrichtung zur Heizkostenverteilung durch elektronische Erfassung der von einzelnen Abnehmern in Ableseperioden verbrauchten Wärmemengen.

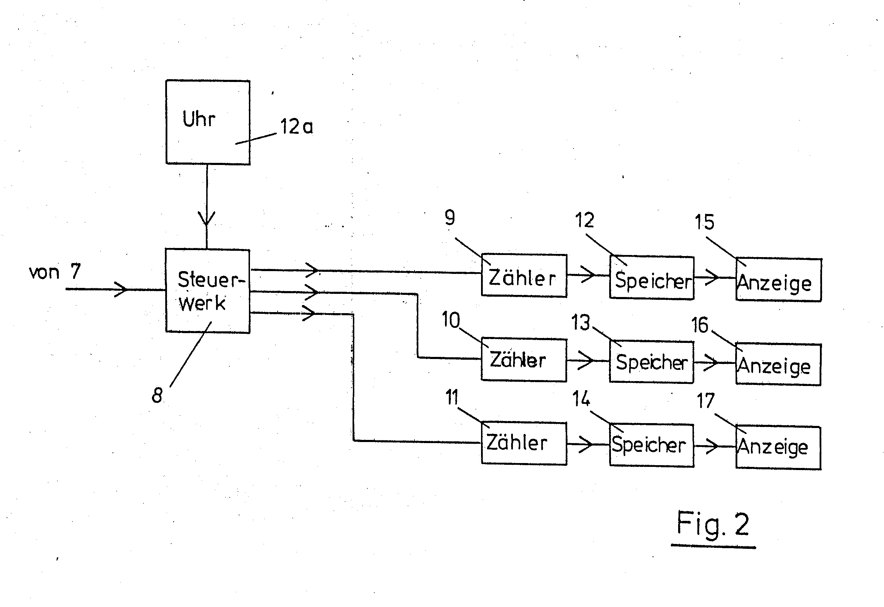

(57) In einem Heizkostenverteiler zur elektronischen Erfassung der von einzelnen Abnehmern in Ableseperioden verbrauchten Wärmemengen wird ein von einer Auswertschaltung abgegebenes Signal zu einem zeitlichen Meßwertintegral integriert (Zähler 9, 10) für jeden Abnehmer sind mindestens zwei rücksetzbare Speicher (12, 13) vorgesehen. Ein zeitgesteuertes Steuerwerk (8) steuert die Auswertschaltung, den Integrator (Zähler 10) sowie den ersten und den zweiten Speicher (12, 13) in der Weise, daß jeweils in einem der beiden Speicher (12) das während einer Ableseperiode gebildete aktuelle Meßwertsignal eingespeichert wird und das am Ende dieser Ableseperiode erreichte Stichtag-Meßwertintegral bis mindestens zum Ende der folgenden Ableseperiode gespeichert bleibt. Während dieser folgenden Ableseperiode nimmt wiederum der jeweils andere der beiden Speicher (13) das aktuelle Meßwertsignal dieser folgenden Meßwertperiode auf. Hierzu gehört Figur 2.

Fig. 2

EP 0 122 971 A2

0122971

- 1 -

Heizkostenverteiler zur elektronischen Erfassung der von
einzelnen Abnehmern in Ableseperioden verbrauchten Wärmemengen und Verfahren zur Heizkostenverteilung

Die Erfindung betrifft einen Heizkostenverteiler zur elektronischen Erfassung der von einzelnen Abnehmern in Ableseperioden verbrauchten Wärmemengen nach dem Oberbegriff des
Anspruchs 1. Die Erfindung betrifft weiter ein entsprechendes
Verfahren.

In derartigen bekannten elektronischen Heizkostenverteilern
wird die von einem einzelnen Abnehmer verbrauchte Wärmemenge
in Abhängigkeit von einer Temperaturdifferenz errechnet, die
beispielsweise zwischen einer Heizkörpertemperatur und der
umgebenden Raumtemperatur auftritt. Das dieser Temperatur
entsprechende elektrische Temperaturdifferenzsignal wird in
einer Auswertschaltung mit einem Faktor bewertet, so daß das
errechnete von der Auswertschaltung abgegebene Signal ein
Maß für die von dem Abnehmer jeweils beanspruchte Wärmeleistung ist. Die Auswertschaltung kann dabei durch ein
Rechenwerk eines Mikrocomputers realisiert werden, der durch
einen Taktgeber quarzzeitgesteuert ist. Das errechnete, die
jeweilige Wärmeleistung darstellende Signal wird zu einem
Meßwertintegral beispielsweise in einem Anzeigezähler integriert und mittels dieses Anzeigezählers gespeichert und
angezeigt. Die zeitliche Integration erfolgt dabei zwischen
zwei Ablesestichtagen in jeweils einer Ableseperiode, die
sich beispielsweise über ein Jahr erstrecken kann. Das von
der Auswertschaltung abgegebene Signal kann dabei entweder die
von einem einzelnen Heizkörper abgegebene Wärmemenge darstellen oder aber, wenn diese Signale miteinander verknüpft
sind, die Summen-Wärmemenge aller Heizkörper in einer Wohneinheit. Ein Problem der Heizkostenverteilung liegt darin,
daß der Verbrauch der Wärmemengen durch die einzelnen Abnehmer (Wohneinheiten) zu einem bestimmten Stichtag einheitlich erfolgen sollte, wenn die Verteilung aussagekräftig sein soll. Wenn sich die Meßgeräte bzw. die Anzeigevorrichtung der Heizkostenverteiler in den einzelnen Wohnungen befinden, können diese in der Regel nicht vollzählig an einem bestimmten Stichtag betreten werden, so daß sich eine u.U. beträchtliche Zeitdifferenz zwischen den Ablesungen in den einzelnen Wohnungen bzw. bei den einzelnen Abnehmern in einer Wohnanlage ergibt. Daraus resultiert eine nicht erfaßbare Verbrauchs- und Kostenunsicherheit, besonders wenn der Ablesezeitpunkt in eine Jahreszeit großen Wärmeverbrauchs fällt.

Deswegen sind elektronische Heizkostenverteiler der oben angegebenen Gattung so angeordnet worden, daß die Anzeigenspeicher der einzelnen Wohnungen einer Wohnanlage an zentraler Stelle außerhalb der Wohnungen zusammengefaßt sind. Daraus ergibt sich aber die Notwendigkeit einer teuren Verkabelung zwischen den Anzeigespeichern und den Temperaturfühlern an den Heizkörpern bzw. den diesen Temperaturfühlern nachgeschalteten Einrichtungen, die das der Temperaturdifferenz oder der jeweiligen Wärmeleistung entsprechende Signal erzeugen, das zu dem Meßwertintegral zu integrieren ist.

Der vorliegenden Erfindung liegt daher die Aufgabe zugrunde, unter Verzicht auf eine zentralisierte Anordnung von Anzeigespeichern einen Heizkostenverteiler der eingangs genannten Gattung so auszubilden, daß die am Ende jeder Ableseperiode erreichten Meßwertintegrale praktisch unabhängig von dem Ablesezeitpunkt für alle Abnehmer einer zusammengehörigen Gruppe, beispielsweise einer Wohnanlage, festgestellt werden können.

Diese Aufgabe wird durch die Ausbildung eines Heizkostenverteilers mit den in dem kennzeichnenden Teil des Anspruchs 1

0122971

angegebenen Merkmalen gelöst.

Mit dem erfindungsgemäßen dezentralisiert einsetzbaren Heizkostenverteiler werden die wesentlichen Vorteile erzielt, daß die von diesem Heizkostenverteiler während jeweils einer Ableseperiode gebildeten Meßwertintegrale auch nach dem Ablesestichtag exakt abgelesen werden können und der Heizkostenverteilung zugrundegelegt werden können. Die während jeder Ableseperiode gebildeten Meßwertintegrale sind bis zum Ende der darauf folgenden Ableseperiode - und mit einem Zusatzspeicher darüber hinaus - feststellbar. Abgesehen davon, kann außer dem in der abgelaufenen Ableseperiode erreichten Meßwertintegral auch das aktuelle Meßwertintegral abgelesen werden, welches während der noch nicht abgeschlossenen Ableseperiode erreicht ist. Der zusätzliche Aufwand für diesen Heizkostenverteiler ist besonders dann gering, wenn als Steuerwerk Teile eines Mikrocomputers verwendet werden, der zu der ohnehin erforderlichen Auswertschaltung gehört. Ebenso kann eine Uhr, von deren Abhängigkeit das Steuerwerk zeitgesteuert ist, weitgehend oder vollständig durch den Mikrocomputer und dessen Taktgeber realisiert sein. - Das Prinzip des Heizkostenverteilers besteht darin, daß das jeweils im Verlaufe einer Ableseperiode sich einstellende Meßwertintegral, welches ein Maß für die verbrauchte Wärmemenge ist, in einem der Speicher gespeichert wird, während wenigstens in einem zweiten Speicher das zum Abschluß der vorangehenden Ableseperiode erreichte Stichtag-Meßwertsignal über eine Ableseperiode unverändert gespeichert bleibt und zur Anzeige zur Verfügung steht. Als von der Auswertschaltung abgegebenes Signal, welches zu einem Meßwertintegral zeitlich integriert wird, können sowohl Impulse vorgesehen sein, deren Frequenz der Wärmeleistung entspricht, die dem einzelnen Abnehmer zugeführt wird. Statt der Impulse mit variabler Impulsfrequenz kommen aber auch andere Analog-und Digitalsignalformen in Betracht, denen der Integrator jeweils anzupassen ist. - Anstelle der genannten auf Null rücksetzbaren Speicher können auch solche Speicher vorgesehen werden, die auf die Differenz der Speicherinhalte beider Speicher am Ablesetag einstellbar sind.

Diese Voreinstellung empfiehlt sich bei Löschung eines der beiden Speicher nach der Ablesung, so daß der andere Speicher das bis zum Ende der Ableseperiode,in die der Ablesetag fällt, auftretende restliche Meßwertintegral zu dem voreingestellten Wert hinzuaddieren muß.

Eine erste Ausführungsvariante des erfindungsgemäßen Heizkostenverteilers ist in Anspruch 2 angegeben. Bei dieser Variante wechseln sich die beiden Speicher jeweils hinsichtlich der Funktion der Aufnahme des aktuellen Meßwertintegrals und der Speicherung des vorangehenden Stichtag-Meßwertintegrals ab. Deswegen ist eine zusätzliche optische Kennzeichnung der mit den Speichern verbundenen Anzeigeeinrichtungen sinnvoll, aus denen sich ergibt, ob die Anzeige das aktuelle Meßwertintegral oder das Stichtag-Meßwertintegral darstellt.

Insbesondere zur Verwendung in der voranstehenden Variante ist jeder Speicher zweckmäßig mit einem Integrator kombiniert. Ein solcher Speicher zum Zählen/der Wärmeleistung ent-sprechenden Impulsen kann besonders einfach als Rollenzählwerk ausgebildet sein. Dabei dient jeder Speicher gleichzeitig zur Anzeige des gezählten Meßwertintegrals und stellt somit einen Anzeigespeicher dar.-Eine zweite Variante des erfindungs-gemäßen Heizkostenverteilers ist in Anspruch 6 angegeben.

Hierin ist jeweils der erste Speicher zur Aufnahme des aktuellen Meßwertintegrals vorgesehen. Nach Abschluß einer Ableseperiode wird zum Stichtag das in dem ersten Speicher erreichte Stichtag-Meßwertintegral in den zweiten Speicher übertragen. Der zweite Speicher stellt somit immer das Stichtag-Meßwertintegral der jeweils letzten Ableseperiode dar, während der erste Speicher zur Aufnahme des neuen aktuellen Meßwertintegrals bereitsteht. - Wenn hier an jedem der Speicher eine Anzeigeeinrichtung angeschlossen ist, besteht infolge der festen Zuordnung der Anzeigeeinrichtung zu dem aktuellen Meßwertintegral bzw. zu dem Stichtag-Meßwertintegral keine Verwechslungsmöglichkeit. Besonders wenig aufwendig genügt für die letzte Variante des Heizkostenverteilers nur ein auf die jeweiligen Speicher umschaltbarer Integrator. Die Umschaltung erfolgt dabei durch das Steuerwerk entsprechend den Ableseperioden. In ähnlicher Weise kann auch eine einzige Anzeigeeinrichtung für alle Speicher an diese umschaltbar angeschlossen werden. Dabei ist durch den Umschalter wählbar, ob das aktuelle Meßintegral oder das letzte Stichtag-Meßwertintegral anzuzeigen ist. - Insbesondere bei der letztgenannten Variante kann auch der Integrator bzw. ein als Integrator vorgesehener Zähler als fortlaufend wirkender Integrator bzw. Zähler ohne Rücksetzung ausgebildet sein. Dann ist das aktuelle Meßwertintegral, welches der in einer Heizperiode verbrauchten Wärmemenge proportional ist, durch Subtraktion des Gesamtintegratorstandes von dem Stichtag-Meßwertintegral der letzten Ableseperiode zu bilden. Diese Differenz wird in den Speicher für das aktuelle Meßwertintegral eingegeben.

Insbesondere bei der letztgenannten Variante des Heizkostenverteilers sind die Speicher vorteilhaft als Halbleiterspeicher ausgebildet, so daß die Speicherinhalte an dem Ende der Meßperioden leicht übertragbar sind. Die Halbleiterspeicher haben außerdem den bekannten Vorteil einer hohen Speicherdichte, so daß sich auch kurze Ableseperioden wirtschaftlich realisieren lassen. Insbesondere beseitigen monatliche Ableseperioden leicht die Schwierigkeiten einer gerechten Heizkostenzurechnung, wenn ein Mieterwechsel im Verlaufe eines Jahres eintritt, welches normalerweise das Zeitintervall einer Ableseperiode ist.

Zur Variation der Ableseperioden ist das Steuerwerk zweckmäßig von einer extern auf die Ableseperioden einstellbaren Uhr steuerbar. Die Einstellung kann dabei je nach der Art der Uhr mechanisch oder elektrisch erfolgen.

In besonders wirtschaftlicher Weise ist für sämtliche Speicher nur eine Anzeigeeinrichtung vorgesehen. Diese kann manuell durch einen Umschalter auf das jeweils gewünschte Meßwertintegral eingestellt werden. Insbesondere kann an dem Stichtag das Stichtag-Meßintegral aus dem zugehörigen Speicher in die Anzeigeeinrichtung übertragen werden.

Statt des manuell betätigbaren Umschalters kann aber auch der Umschalter von dem Steuerwerk fortlaufend selbsttätig umgeschaltet werden, so daß der Betrachter der Anzeigeeinrichtung in kurzer Zeit sowohl das aktuelle Meßwertintegral als auch das Stichtag-Meßwertintegral der vergangenen Ableseperiode kennt. Besonders für die selbsttätige fortlaufende Umschaltung empfiehlt sich eine Ausgestaltung der Anzeigeeinrichtung in der Weise, daß der Anzeigezustand oder Status gekennzeichnet wird. Beispielsweise kann das aktuelle Meßwertintegral während 5 Sekunden fortlaufend angezeigt werden, während darauf folgend während weiterer 5 Sekunden eine blinkende Anzeige des Stichtag-Meßwertintegrals erfolgt.

Beide Versionen des Heizkostenverteilers können durch einen dritten rücksetzbaren Speicher ergänzt werden, der sinngemäß in der gleichen Weise wie die beiden anderen Speicher in dem Heizkostenverteiler angeordnet ist. - Somit wird in den dritten Speicher entweder direkt von der Auswertschaltung über einen Integrator das Stichtag-Meßwertintegral eingespeist, welches bis zum Ablauf der übernächsten Ableseperiode nicht gelöscht wird, oder aber es wird dieses Stichtag-Meßwertintegral in einen bestimmten von drei Speichern übertragen, so daß er jeweils aus diesem Speicher auslesbar ist. Das Auslesen erfolgt dabei durch Ansteuerung des dritten Speichers mit einer Taste. Das über den Ablauf der nächstfolgenden Ableseperiode gespeicherte Stichtag-Meßwertintegral in jweils einem dritten Speicher dient zur Dokumentation, wenn es nach dem Ablesen des Stichtag-Meßwertintegrals und nach Verteilung der Heizkosten zu Zweifeln an der Heizkostenverteilung kommen sollte.

Die Erfindung wird im folgenden anhand einer Zeichnung mit drei Figuren erläutert. Es zeigen:

Fig. 1      eine Eingangsschaltungsanordnung für den Heizkostenverteiler,

Fig. 2      eine erste Version des Heizkostenverteilers,

Fig. 3      eine zweite Version des Heizkostenverteilers,und sämtliche Schaltungsanordnungen sind durch ein vereinfachtes Blockschaltbild dargestellt.

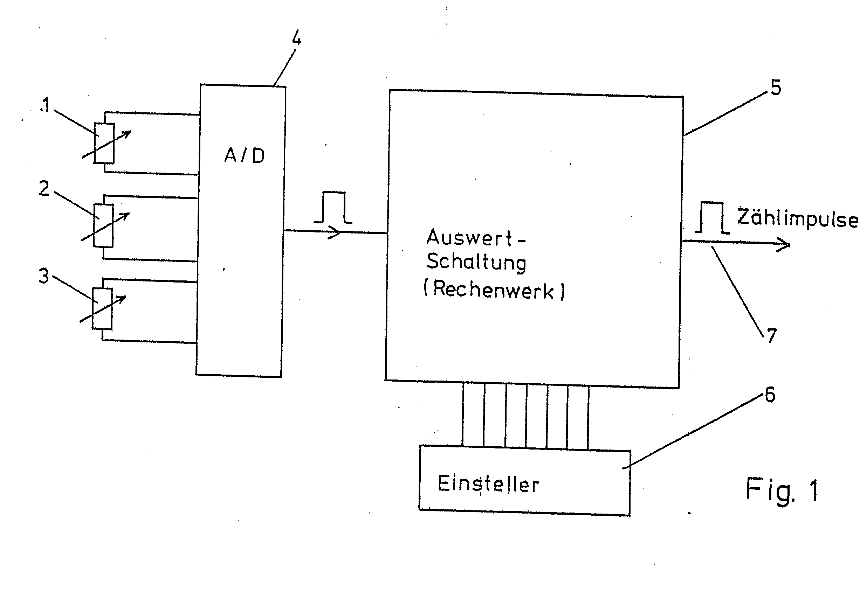

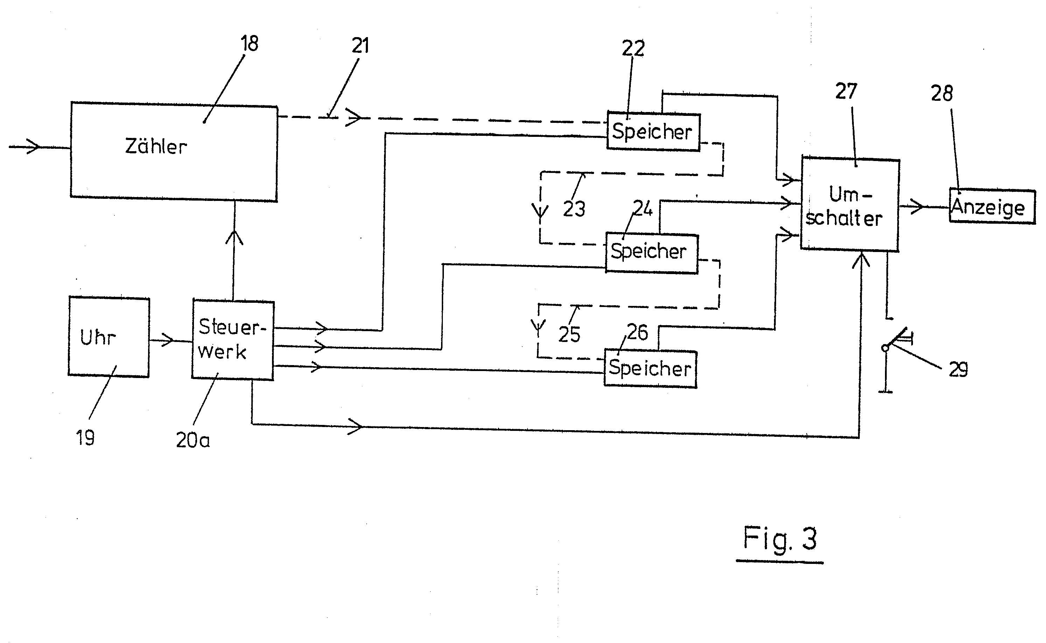

Die Eingangsschaltung des elektronischen Heizkostenverteilers in Fig. 1 eignet sich sowohl zum Anschluß an die erste Version des Heizkostenverteilers nach Fig. 2  als auch an die zweite Version des Heizkostenverteilers nach Fig.3.

In Fig. 1 sind mit den Bezugszeichen 1 - 3 Temperaturfühler bezeichnet, die an verschiedenen Stellen einer beheizten Wohneinheit, insbesondere an Radiatoren angeordnet sein können. Die Temperaturfühler sind über einen gemeinsamen im Multiplexbetrieb arbeitenden Analog/Digital-Umsetzer 4, der insbesondere zum Umsetzen einer der temperaturproportionalen Spannung in eine proportionale Pulsfrequenz ausgebildet ist, an ein Rechenwerk, d.h. eine Logikschaltung angeschlossen, die als Auswertschaltung 5 fungiert. An Eingänge der Auswertschaltung ist ferner ein Einsteller 6 zur Vorgabe eines konstanten Faktors angeschlossen, welcher ein Maß für die Heizkörperleistung (Radiatorleistung) darstellt und der ferner Korrekturwerte der Temperaturfühler beinhalten kann.

In der Auswertschaltung werden die mit den Temperaturfühlern 1 - 3 ermittelten Temperaturen miteinander verknüpft und mit dem eingestellten Faktor bewertet, so daß die von einem Ausgang 7 der Auswertschaltung abgegebene Zählimpulsfrequenz ein Maß für die aktuelle gemessene Heizleistung ist.

Diese Impulse werden in der Variante des Heizkostenverteilers nach Fig. 2 in ein Steuerwerk 8 eingespeist und durch das Steuerwerk je nach der vorliegenden Ableseperiode in einen von drei Zählern 9 - 11 eingespeist.

Beispielsweise dient der Zähler 9 zum Zählen der Zählimpulse in einer ersten Ableseperiode während eines Jahres, der Zähler 10 zum Zählen der Zählimpulse der darauf folgenden Ableseperiode und der Zähler 11 zum Zählen der Zählimpulse in der übernächsten Ableseperiode. Während der letztgenannten übernächsten Ableseperiode wird also gerade in den Zähler 11 das aktuelle Meßwertintegral als Zahl der Zählimpulse eingezählt, während der Zähler 10 das am Ende der vorhergehenden Ableseperiode erreichte Stichtag-Meßwertintegral beinhaltet und der Zähler 9 schließlich das schon bei der vorletzten Ableseperiode ermittelte Stichtag-Meßwertintegral zu Dokumentationszwecken.

Diese Vorgänge werden durch das Steuerwerk mittels einer voreinstellbaren Uhr 12a gesteuert. Die Uhr bestimmt dabei die jeweiligen Ableseperioden, jährlich oder in kürzeren Zeitintervallen.

In Fig. 2 ist jedem der Zähler 19 und 11 je ein Speicher 12, 13, 14 zugeordnet, der den jeweiligen Zählwert speichert. Ferner ist an jeden Speicher eine Anzeigeeinrichtung 15 bzw. 16 bzw. 17 zur Anzeige des gespeicherten Meßwertintegrals angeschlossen. Vorzugsweise bestehen aber in der Ausführungsform nach Fig. 2 Zähler, Speicher und Anzeigeeinrichtung aus einem einheitlichen Rollenzählwerk.-In der zweiten Variante nach Fig. 3 wird die Zählgröße von dem Ausgang der Meßwertschaltung 5 in einen einzigen Zähler 18 eingespeist. In diesem Zähler wird während jeder Ableseperiode durch eine Uhr 19 und ein Steuerwerk 20a gesteuert das Meßwertintegral gebildet. Am Ausgang 21 des Zählers erscheint daher während einer Ableseperiode das aktuelle Meßwertintegral, während am Ende der Ableseperiode das Stichtag-Meßwertintegral erreicht ist. Das jeweils vorliegende Meßwertintegral wird in einen ersten Speicher 22 eingespeist.

Während der darauf folgenden Ableseperiode wird - ebenfalls durch die Uhr 19 und das Steuerwerk 20a gesteuert - das in dem Speicher 22 gespeicherte Meßwertintegral über eine Leitung 23 in den zweiten Speicher 24 übertragen. Der erste Speicher 22 wird anschließend gelöscht und steht zur Aufnahme des aktuellen Meßwertintegrals der jetzt ablaufenden Ableseperiode zur Verfügung.

- 10 -

Nach Abschluß dieser zweiten Ableseperiode erfolgt wiederum eine Übertragung der abgespeicherten Stichtag-Meßwertintegrale und zwar zunächst des in dem zweiten Speicher enthaltenen Stichtag-Meßwertintegrals über eine Leitung 25 in einen dritten Speicher 26. Der Speicher 24 steht jetzt zur Aufnahme des in den Speicher 22 enthaltenen Stichtag-Meßwertintegrals zur Verfügung. Nach dieser Übertragung wird der erste Speicher 22 gelöscht und kann das neue aktuelle Meßwertintegral aufnehmen. Insgesamt enthalten also die Speicher 22, 24 und 26 in dieser Reihenfolge das aktuelle Meßwertintegral, das Stichtag-Meßwertintegral der letzten Ableseperiode und das Stichtag-Meßwertintegral der vorletzten Ableseperiode.

Alle diese Meßwertintegrale können über einen Umschalter 27 einer Anzeigeeinrichtung 28 zugeführt werden. Im einzelnen werden die Speicherinhalte der Speicher 22 und 24 selbsttätig sequentiell mit einem relativ kurzen Abstand von beispielsweise 5 Sekunden durch das Steuerwerk 20a gesteuert in der Anzeigeeinrichtung 28 dargestellt. Zur Kennzeichnung des Meßwertintegrals aus dem zweiten Speicher 24 kann während dieser Phase der Darstellung beispielsweise die Anzeige intermittierend erfolgen. - Zur Darstellung des Stichtag-Meßwertintegrals in dem Speicher 26 wird eine Taste 29 betätigt. Die Darstellung des in dem Speicher 26 zu Dokumentationszwecken enthaltene Stichtag-Meßwertintegrals kann aber auch statt mittels der Anzeigeeinrichtung 28 durch eine separat anschließbare Anzeigeinrichtung erfolgen.

Sowohl die erste Variante nach Fig. 2 als auch die zweite Variante nach Fig. 3 sind vorzugsweise dezentral in unmittelbarer Nähe des jeweiligen Abnehmers angeordnet. Trotzdem können diese Heizkostenverteiler bei Übertragung der Meßwertintegrale verschiedener Abnehmer zu einer gemeinsamen Stelle auch zentral angeordnet sein. Dabei wird allerdings nur ein Teil der Vorteile dieser Heizkostenverteiler ausgenutzt.

-1-

Patentansprüche:

1. Heizkostenverteiler zur elektronischen Erfassung der
   von einzelnen Abnehmern in Ableseperioden verbrauchten
   Wärmemengen, mit mindestens einem Integrator und
   mindestens einem gegebenenfalls rücksetzbaren Speicher,
   in denen für jeden Abnehmer ein der jeweiligen Wärmeleistung entsprechendes, von einer Auswertschaltung
   abgegebenes Signal zu einem Meßwertintegral zeitlich
   integriert wird und das Meßwertintegral bis mindestens
   zum Ende jeder Ableseperiode anzeigbar gespeichert wird,
   d a d u r c h   g e k e n n z e i c h n e t ,
   daß für jeden Abnehmer mindestens ein zweiter rücksetzbarer Speicher (13 bzw. 24) vorgesehen ist und daß ein
   zeitgesteuertes Steuerwerk (8 bzw. 20a) derart eingerichtet
   ist und mit der Auswertschaltung (5), dem Integrator
   (Zähler 10 bzw. 18) sowie mit dem ersten (12 bzw. 22) und
   dem zweiten Speicher (13 bzw. 24) in Verbindung steht, daß
   jeweils in einen der beiden Speicher (z.B. 12 bzw. 22) das
   während einer Ableseperiode gebildete aktuelle Meßwertintegral eingespeichert wird und daß in einem der beiden
   Speicher (z.B. 12 bzw. 24) das am Ende dieser Ableseperiode erreichte Stichtag-Meßwertintegral eingespeichert
   wird und bis mindestens zum Ende der folgenden Ableseperiode gespeichert bleibt, während jeweils der andere
   der beiden Speicher (z.B. 13 bzw. 24) wiederum das
   aktuelle Meßwertintegral dieser folgenden Meßwertperiode
   aufnimmt.

2. Heizkostenverteiler nach Anspruch 1,
   g e k e n n z e i c h n e t   d u r c h
   eine derartige Organisation des Steuerwerks (8) und
   zyklische Verknüpfung mit dem zu Beginn jeder Ableseperiode rücksetzbaren Integrator bzw. den rücksetzbaren Integratoren (Zähler 9, 10) und den Speichern (12, 13), daß während einer (z.B. n-ten) Ableseperiode das aktuelle Meßwertintegral in dem ersten Speicher (12) eingespeichert wird und zumindest bis zum Ende (Stichtag) der folgenden (z.B. n + 1-ten) Meßperiode gespeichert bleibt, während in dem zweiten Speicher (13) das am Ende (Stichtag) einer vorhergehenden (z.B. n - 1-ten) Ableseperiode erreichte Stichtag-Meßwertintegral gespeichert bleibt, und daß zu Beginn der folgenden (z.B. n + 1-ten) Ableseperiode der zweite Speicher (13) zurückgesetzt wird und anschließend das aktuelle Meßwertintegral fortlaufend aufnimmt und das am Ende (Stichtag) dieser folgenden (z.B. n + 1-ten) Ableseperiode erreichte Stichtag-Meßwertintegral mindestens bis zum Ende der übernächsten Ableseperiode gespeichert bleibt (Fig. 2).

3. Heizkostenverteiler nach Anspruch 1 oder 2,
d a d u r c h   g e k e n n z e i c h n e t ,
daß jeder Speicher mit einem Integrator kombiniert ist.

4. heizkostenverteiler nacheinem der Ansprüche 1 - 3,
d a d u r c h   g e k e n n z e i c h n e t ,
daß jeder Speicher als Anzeigespeicher ausgebildet
ist.

5. Heizkostenverteiler nach Anspruch 4,
d a d u r c h   g e k e n n z e i c h n e t ,
daß als Anzeigespeicher ein Rollenzählwerk vorgesehen
ist.

6. Heizkostenverteiler nach Anspruch 1,
d a d u r c h   g e k e n n z e i c h n e t ,
daß in einer Kette ein Ausgang des ersten Speichers (22) mit einem Eingang des zweiten Speichers (24) verbunden ist und daß das Steuerwerk (20a) so organisiert und mit dem zu Beginn jeder Ableseperiode zurücksetzbaren Integrator (Zähler 28) und den Speichern (22, 24) derart verknüpft ist, daß während jeder (z.B. n-ten) Ableseperiode bis zum Ende (Stichtag) dieser Ableseperiode das aktuelle Meßwertintegral in dem ersten Speicher (22) fortlaufend eingespeichert wird, währenddessen in dem zweiten Speicher (24) das am Ende (Stichtag) der vorhergehenden (z.B. n - 1-ten) Ableseperiode erreichte Stichtag-Meßwertintegral gespeichert bleibt und daß zu Beginn der nächsten (z.B. n + 1-ten) Ableseperiode der zweite Speicher (24) zurückgesetzt wird und das am Ende (Stichtag) der letzten (z.B. n-ten) Ableseperiode erreichte Stichtag-Meßwertintegral aus dem ersten Speicher (22) übernimmt, der anschließend zurückgesetzt wird und das aktuelle Meßwertintegral der jetzt ablaufenden (z.B. n + 1-ten) Ableseperiode aufnimmt.

7. Heizkostenverteiler nach Anspruch 6,
   d a d u r c h   g e k e n n z e i c h n e t ,
   daß nur ein Integrator (Zähler 18) vorgesehen ist, dessen Ausgang über das Steuerwerk (20a) zu jeweils einem Eingang der Speicher (22, 24) durchschaltbar ist.

8. Heizkostenverteiler nach Anspruch 6,
   g e k e n n z e i c h n e t   d u r c h
   Halbleiterspeicher (EAROMS) als Speicher.

9. Heizkostenverteiler nach einem der vorangehenden Ansprüche,
   d a d u r c h   g e k e n n z e i c h n e t ,
   daß das Steuerwerk (8 bzw. 20a) von einer extern auf die Ableseperioden (Stichtage) einstellbaren Uhr (12a bzw. 19) steuerbar ist.

10. Heizkostenverteiler nach einem der vorangehenden Ansprüche, vorzugsweise Ansprüche 6 - 9, d a d u r c h g e k e n n z e i c h n e t , daß nur eine Anzeigeeinrichtung (28) wahlweise für das aktuelle Meßwertintegral oder für das Stichtag-Meßwertsignal vorgesehen ist, die über einen manuell betätigbaren Umschalter mit dem ersten Speicher und dem zweiten Speicher verbindbar ist.

11. Heizkostenverteiler nach Anspruch 10, d a d u r c h g e k e n n z e i c h n e t , daß der Umschalter (27) von dem Steuerwerk (20a) selbsttätig fortlaufend umschaltbar ist, so daß kurzzeitig aufeinanderfolgend das aktuelle Meßwertintegral und das Stichtag-Meßwertintegral darstellbar sind.

12. Heizkostenverteiler nach Anspruch 10 oder 11, d a d u r c h g e k e n n z e i c h n e t , daß ein Unterbrecher in der Anzeigeeinrichtung zur Markierung des Anzeigezustandes (aktuelles Meßwertintegral oder Stichtag-Meßwertintegral) durch blinkende Anzeige vorgesehen ist.

13. Heizkostenverteiler nach einem der vorangehenden Ansprüche, d a d u r c h g e k e n n z e i c h n e t , daß ein dritter rücksetzbarer Speicher (14 bzw. 26) vorgesehen ist, in dem durch das Steuerwerk (8 bzw. 20a) gesteuert ein Stichtag-Meßwertintegral (z.B. der n-ten Ableseperiode) bis zum Stichtag der übernächsten (z.B. n + 2-ten) Ableseperiode speicherbar ist.

14. Verfahren zur Heizkostenverteilung durch elektronische Erfassung der von einzelnen Abnehmern verbrauchten Wärmemengen durch Verwendung eines Heizkostenverteilers nach mindestens einem der Ansprüche 1 bis 13.

Fig. 1

Fig. 2

Fig. 3

0122971